# EUROPEAN PATENT SPECIFICATION

(11) **EP 3 444 081 B1**
(45) Date of publication and mention of the grant of the patent: **15.03.2023**
(21) Application number: 16898574.5
(22) Date of filing: 12.04.2016
(51) Int. Cl.: B25J 19/00, B25J 15/00, B25J 15/04, B25J 19/02, B25J 9/16

(54) **WORKING ROBOT**
ARBEITSROBOTER
ROBOT DE TRAVAIL

(43) Date of publication of application: 20.02.2019
(73) Proprietor: Fuji Corporation, Chiryu-shi, Aichi 472-8686 (JP)
(72) Inventor: WATANABE, Kenji, Chiryu Aichi (JP); NAGASAKA, Nobuo, Chiryu Aichi (JP); KANAI, Hidekazu, Chiryu Aichi (JP); TSUCHIDA, Kosuke, Chiryu Aichi (JP)
(74) Representative: Grünecker Patent- und Rechtsanwälte PartG mbB
(86) International application number: PCT/JP2016/061768
(87) International publication number: WO 2017/179114

(56) References cited:
- WO-A1-2015/052790
- JP-A- H0 385 603
- JP-A- H0 592 389
- JP-A- H09 174 474
- JP-A- S59 196 185
- JP-A- S59 196 185
- JP-A- S59 223 818
- JP-A- S59 230 350
- JP-A- 2002 352 370
- JP-U- H0 580 687
- US-A- 4 766 322

## Description

### Technical Field

The present invention relates to communication between a fixing section and a movable section of a work robot used at a production site or the like.

### Background Art

JP S59 196185 A relates to a signal transmitter for a multi-joint arm for an industrial robot. By providing a plurality of time division multiplexed transmission circuits embedded between joints and connected by pairs of signal lines, the multi-joint arm has a reduced number of signal lines and thereby improves safety and workability. Rotation angle sensors and sensors in four arm segments provide signals that are extracted to respective transmission circuits which are connected by signal lines. Each multiplexer, comprising a shift registers and a multiplexer, is capable of transmitting three sensor signals, which are forwarded to a controller.

WO 2015/052790 A1 relates to a multiplexing communication device and working robot. A transmission data synthesis processing unit of this multiplexing communication device multiplexes the encoder signals, which are outputted from a linear scale and a rotary encoder, to generate frame data, and transmits the frame data. A transmission data synthesis processing unit configures the encoder signals in bit positions of the frame data that correspond to the linear scale and the rotary encoder. For each cycle in which frame data is transmitted, an encoder signal and information indicating whether or not data is present in the encoder signal are alternately configured in the bit positions comprised by the encoder signals.

in recent years, automation of tasks using work robots has progressed, for example, in the field of FA (i.e., Factory Automation) in order to cut down on labor at manufacturing sites. Some work robots, robot arms for example, have a so-called parallel link mechanism in which one end effector is supported by a plurality of arm sections arranged in parallel, and others have a serial link mechanism in which a plurality of arm sections, such as in an articulated robot, are concatenated to support the end effector.

The work robot includes, for example, an electromagnetic motor as a driving source for moving an end effector and an arm, a controller for controlling the electromagnetic motor, and the like. The controller (e.g., an amplifier) drives and controls the electromagnetic motor based on an encoder signal output from an encoder that detects displacement or the like of the electromagnetic motor. In the work robot, the number of communication cables and power cables, which connect a fixing section, provided with a controller, to a movable section, provided with an encoder, may increase as the number of devices to be mounted on the end effector or the like, such as the electromagnetic motor and the encoder, being increased. On the other hand, in some articulated robots, the communication between a motor control circuit, provided for a joint, and a host computer of the fixing section is known to be multiplexed (e.g., Patent Document 1).

### Prior Art

### Patent literature

Patent Document 1: Japanese Patent Application Laid-Open No. 62-137608

### Summary of Invention

### Technical Problem

The end effector of each work robot mentioned above may be equipped with sensors, cameras, and the like in addition to the electromagnetic motor depending on the application. Also in this case, it is necessary to dispose the various communication cables between the fixing section and the movable section depending on the type and number of elements mounted on the end effector. Therefore, it is necessary to secure a region in the arm section or the like for wiring a necessary cable according to the type of the end effector, which leads to a problem in which the degree of freedom in designing the device is compromised.

It is an object of the present invention to provide a work robot capable of reducing the number of communication cables between an operating portion and a controller.

### Solution to Problem

This object is solved by the subject matter of the independent claims.

Embodiments are defined by the dependent claims.

A work robot according to an art disclosed in the present application in view of the above-mentioned problems comprises: a device fixing portion; an arm section extending from the device fixing portion and movable with respect to the device fixing portion; an operating portion attached to the arm section; a controller, being provided in the device fixing portion and configured to control the operating portion; a first multiplex communication unit, being provided in the device fixing portion and configured to transmit multiplexed data obtained by multiplexing communication data transmitted between the controller and the operating portion; and a second multiplex communication unit, being provided in the arm section, connected to the operating portion and configured to transmit the multiplexed data by being connected to the first multiplex communication unit via a multiplex communication line.

### Effect of Invention

In the work robot of the present invention, the number of communication cables between the operating portion and the controller are reduced.

### Brief Description of Drawings

[FIG. 1] Fig. 1 is a schematic configuration diagram of a workpiece transferring system.
[FIG. 2] FIG. 2 is a schematic configuration diagram of a workpiece transferring device.
[FIG. 3] FIG. 3 is a diagram showing a state in which an end effector is detached from the attachment section of the workpiece transferring device.
[FIG. 4] FIG. 4 is a block diagram showing electrical connections of the workpiece transferring system, and shows a portion related to the workpiece transferring device.
[FIG. 5] FIG. 5 is a flowchart showing the contents of workpiece processing by a system controller.

### Description of Embodiment

Hereinafter, an embodiment of the present invention will be described with reference to the drawings. First, a workpiece transferring system 10, provided with a workpiece transferring device 11 and a workpiece supplying device 13 will be described as an embodiment of the work robot of the present application.

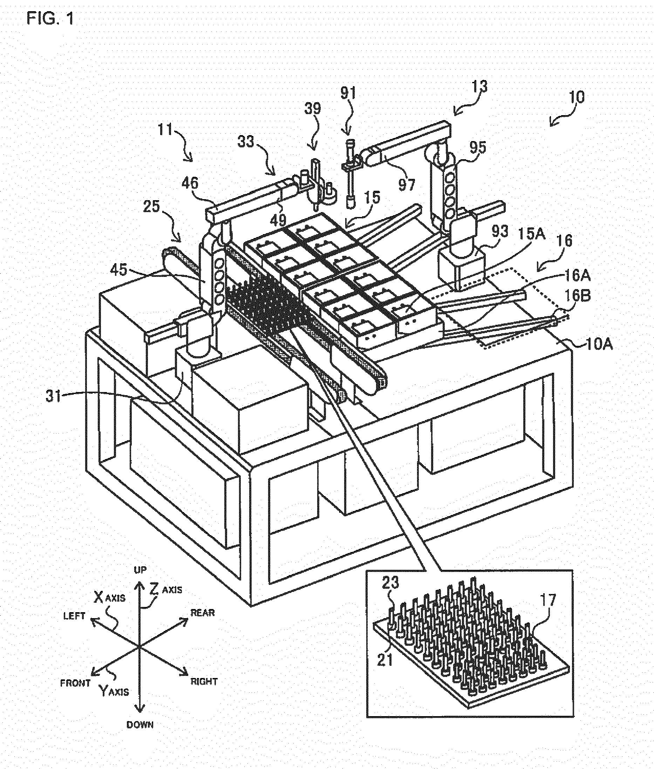

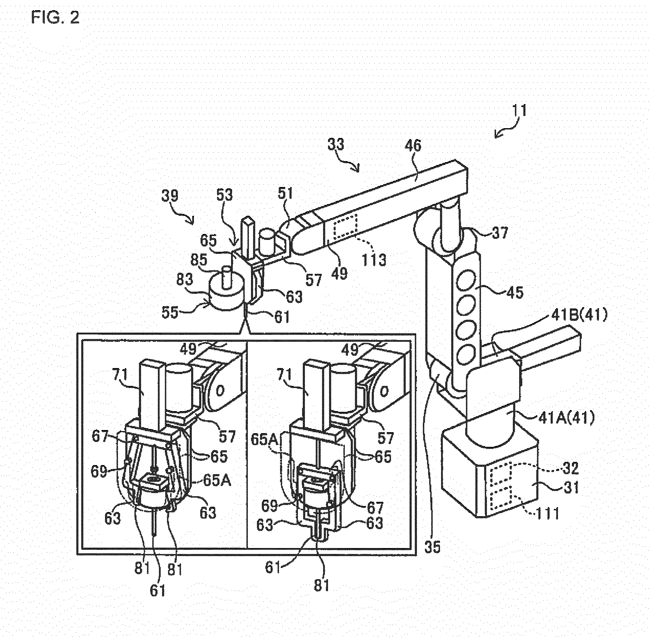

FIG. 1 shows a schematic configuration of the workpiece transferring system 10. FIG. 2 shows a schematic configuration of the workpiece transferring device 11. As shown in FIG. 1, the workpiece transferring system 10 includes a workpiece receiving member 15 or the like on a base 10A in addition to the workpiece transferring device 11 and the workpiece supplying device 13 as described above.

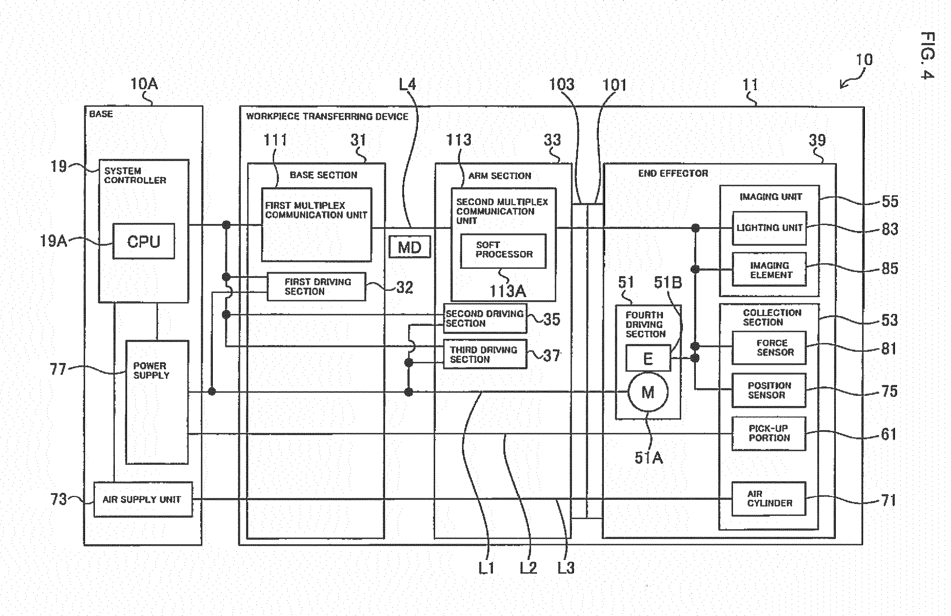

The workpiece transferring system 10, under control of the system controller 19 (refer to FIG. 4) provided on the base 10A, transfers and places a workpiece 21, accommodated by the workpiece receiving member 15, on a pallet 17 to be used for subsequent work. In the workpiece transferring system 10, for example, the workpiece 21, which is placed on the pick-up placement table 15A of the workpiece receiving member 15 in an uncertain orientation, may be placed on the pallet 17 in an aligned state in a predetermined orientation so that a work robot (not shown) or a worker in a subsequent process can easily perform work. The "uncertain orientation" herein refers to a state in which the position, direction, or the like of the workpiece 21 is non-conforming. In the following description, as shown in FIG. 1, the direction in which the pallet 17 is conveyed in the workpiece transferring system 10 is referred to as a left-right direction (X-axis), the direction orthogonal to the left-right direction and parallel to the plane of the conveyed pallet 17 is referred to as a front-rear direction (Y-axis), and the direction orthogonal to the left-right direction and the front-rear direction is referred to as an up-down direction (Z-axis).

The workpiece 21, which is the work object of the present embodiment, is, for example, a bolt. The workpiece 21 is not limited to a bolt and may be, for example, another mechanical component such as a nut, washer, or the like. The workpiece 21 is also not limited to a mechanical component and may be an electrical component, an electronic component, a chemical component, or the like. At least a part of the workpiece 21, for example, a picked-up portion 23 shown in the enlarged view of FIG. 1, is made of a magnetic material. The workpiece 21 is attracted toward electromagnets of the workpiece transferring device 11 or toward the workpiece supplying device 13, as will be described later, with the picked-up portion 23 made of a magnetic material, so that the workpiece 21 is transferred in a state of being picked up.

The workpiece receiving member 15, which stores the workpiece 21, is provided with a plurality of boxes, each box having a box shape with a bottom portion and an open upper portion. Each workpiece receiving member 15 is provided with a pick-up placement table 15A at a predetermined height from the bottom portion. The workpiece 21 stored at the bottom of the workpiece receiving member 15 is transferred to the pick-up placement table 15A by the workpiece supplying device 13. With a part of the bottom of the workpiece receiving member 15 being slanted, workpieces 21 that fall from the pick-up placement table 15A get stored in one place.

A moving portion 16 for moving the workpiece receiving member 15 is provided on the base 10A. The moving portion 16 has a receiving table 16A, on which the workpiece receiving member 15 is placed, and a rail 16B, which moves the receiving table 16A between a retraction position (i.e., a position shown by a dotted line in FIG. 1) and a transfer position (i.e., a position shown by a solid line in FIG. 1). The system controller 19 (refer to FIG. 4) drives a driving source (not shown) based on an operation or the like from an operator to move the receiving table 16A to the retraction position or the transfer position. In this way, the operator can properly replenish the workpiece 21 to the workpiece receiving member 15.

The pallet 17 is a member for arranging and placing workpieces 21, has a magnetic force, and secures the workpieces 21 with the magnetic force. The workpiece transferring device 11 arranges, for example, the heads of bolts, which are workpieces 21, on the pallet 17 at predetermined intervals with the heads of the bolts facing downward. The workpiece transferring device 11 arranges each workpiece 21 at a predetermined position on the pallet 17 determined according to the type of the workpiece 21.

Further, the workpiece transferring system 10 includes a conveying unit 25 for conveying the pallet 17. The conveying unit 25 is a unit that carries in, conveys, and fixes the pallet 17 at the transfer position of the workpiece 21, and then carries the pallet 17 out. The conveying unit 25 has a pair of conveyor belts arranged with a predetermined interval therebetween in the front-rear direction and extending in the left-right direction. The pallet 17 is conveyed by the conveyor belt. The system controller 19 (refer to FIG. 4) has the conveying unit 25 carry out, for example, the pallet 17 to a second device. The second device specifies the position of the workpiece 21 on the pallet 17, based on, for example, position information determined in advance in accordance with the type of the workpiece 21, and performs work.

### (Workpiece transferring device 11)

The workpiece transferring device 11 collects workpieces 21 from each workpiece receiving member 15 and places the collected workpieces 21 on the pallet 17. As shown in FIG. 2, the workpiece transferring device 11 includes a base section 31, a first driving section 32, an arm section 33, a second driving section 35, a third driving section 37, and an end effector 39.

The base section 31 is fixed on the base 10A of the workpiece transferring system 10, and has a support shaft section 41 for supporting the arm section 33. The support shaft section 41 has a shaft 41A and a holder 41B. The shaft 41A has a columnar shape extending in the up-down direction, and the holder 41B is at an upper end portion thereof. The holder 41B supports the proximal end of the arm section 33. The base section 31 has the first driving section 32 built in, and drives the first driving section 32 to rotate the shaft 41A under control of the system controller 19. The holder 41B is driven to rotate together with the rotation of the shaft 41A with an axis in the up-down direction as a central axis.

The arm section 33 is a so-called articulated robot in which the distal end of the first arm 45 connects to proximal end of the second arm 46. The first arm 45 is an elongated member extending in one direction, and its proximal end portion is supported by the holder 41B of the support shaft section 41. The holder 41B of the support shaft section 41 is connected to the first arm 45 via the second driving section 35. The second driving section 35, under control of the system controller 19, rotates the first arm 45 with respect to the holder 41B with a central axis that is in a direction orthogonal to the up-down direction.

The second arm 46 is connected to the distal end of the first arm 45 via a third driving section 37. The second arm 46 is an elongated member extending in one direction from the distal end of the first arm 45. The third driving section 37, under control of the system controller 19 (refer to FIG. 4), rotates the second arm 46 with respect to the distal end of the first arm 45 about a central axis that is in a direction orthogonal to the extending direction of the first arm 45.

The end effector 39 is configured to be detachable from an attachment section 49 provided at the distal end of the second arm 46. The type of the end effector 39 of the workpiece transferring device 11 can be changed according to the application. The end effector 39 mounted in FIG. 2 is an example, and includes a fourth driving section 51, a collection section 53, an imaging unit 55, and a seat 57.

As shown in FIG. 4, the fourth driving section 51 includes a servo motor 51A as a driving source, and an encoder 51B for detecting the rotational position of the servo motor 51A and the like. The encoder 51B transmits an encoder signal corresponding to the rotational drive of the servo motor 51A to the system controller 19 via a multiplex communication line to be described later. The system controller 19 controls a power supply 77 provided on the base 10A based on the inputted encoder signal. The servo motor 51A is, for example, a motor, driven by a three-phase alternating current which include U-phase, V-phase, and W-phase coils, and the coils of each phase are connected to the power supply 77 via a power supply line L1. The power supply line L1 is disposed in the arm section 33. The servo motor 51A is driven in accordance with the three-phase alternating current supplied from the power supply 77 through the power supply line L1. As a result, the fourth driving section 51 is driven under control of the system controller 19. The fourth driving section 51 rotates the seat 57 of the end effector 39 with respect to the attachment section 49 about a central axis that is in a direction orthogonal to the extending direction of the second arm 46.

The first driving section 32, the second driving section 35, and the third driving section 37 have the same configuration as the fourth driving section 51, and are controlled by way of the system controller 19 changing the power supplied from the power supply 77 based on the encoder signal.

As shown in FIG. 2, the seat 57 is an L-shaped plate member, and the collection section 53 is attached to the distal edge of the base 57. The collection section 53 is a member for picking up and collecting the picked-up portion 23 of the workpiece 21, and includes a pick-up portion 61, two clamping portions 63, two plates 65, a fixing member 67, and a clamp pin 69. The two plates 65 are plate-like members, and are fixed to the seat 57 so as to face each other in a plane. The pick-up portion 61, the clamping portions 63, and the fixing member 67 are disposed between the two plates 65.

The fixing member 67 is a rod-shaped member, and is configured to be vertically movable by an air cylinder 71. The air cylinder 71 moves the fixing member 67 up and down in accordance with the amount of air supplied by the air supply unit 73 (see FIG. 4) provided on the base 10A through an air pipe L3. The air pipe L3 is disposed in the arm section 33. The air cylinder 71 is provided with a position sensor 75 shown in FIG. 4. The position sensor 75 outputs a signal corresponding to the position of the fixing member 67 in the up-down direction to the system controller 19. The fixing member 67 is disposed above the plates 65 in the initial position, and moves downward when the workpiece 21 is clamped. The clamping portions 63 are housed inside the plates 65 when the fixing member 67 is in the initial position (see the enlarged view on the left side of FIG. 2).

The pick-up portion 61, with a shaft being connected to an electromagnet, attracts and picks up the magnetic workpiece 21 by the tip of the shaft. The pick-up portion 61 is fixed below the plate 65. The pick-up portion 61 is configured to generate a magnetic force (i.e., an attractive force) in a plurality of stages (e.g., three stages) in accordance with electric power supplied from the power supply 77 (refer to FIG. 4) provided on the base 10A via a power supply line L2.

The two clamping portions 63 clamp and support the workpiece 21 after the pick-up portion 61 has attracted the workpiece 21, as shown in FIG. 1. The clamping portions 63 are pivotally supported at both ends of the rod-shaped fixing member 67 so as to be rotatable. A force sensor 81 is provided at the distal end of each of the clamping portions 63. Each force sensor 81 transmits a signal, corresponding to stress acting on the tip of the corresponding clamping portion 63, to the system controller 19 (refer to FIG. 4) via a multiplex communication line described later.

A clamp pin 69 is fixed to the surface of each of the two clamping portions 63 facing the plate 65. At the same time, guide grooves 65A for guiding the clamp pins 69 are formed in each of the plates 65. Each clamp pin 69 is inserted into one of the guide grooves 65A. Therefore, when the fixing member 67 moves downward, each clamp pin 69 is guided to a predetermined track by one of the guide grooves 65A and becomes exposed from the plate 65. When the fixing member 67 moves downward, the tips of the two clamping portions 63 come into contact with each other and clamp the workpiece 21 (see the enlarged view on the right side of FIG. 2).

The imaging unit 55 is a unit for capturing an image and is fixed to the front surface of the plate 65. The imaging unit 55 includes a lighting unit 83 and an imaging element 85. The lighting unit 83 is a light, circularly disposed on the outer peripheral side of the imaging element 85, which irradiates light toward an imaging target located below the lighting unit 83. The lighting unit 83 is disposed in the imaging unit 55 so as to irradiate light to the entire pick-up placement table 15A, which is the imaging target. The imaging element 85 is an element that generates an electrical charge corresponding to light received and outputs the generated electrical charge. The imaging element 85 is, for example, a CMOS image sensor. The imaging unit 55 generates image data based on the charge outputted from the imaging element 85, and transmits the generated image data to the system controller 19 (refer to FIG. 4) via a multiplex communication line described later.

### (Attachment section 49 of the Workpiece Transferring Device 11)

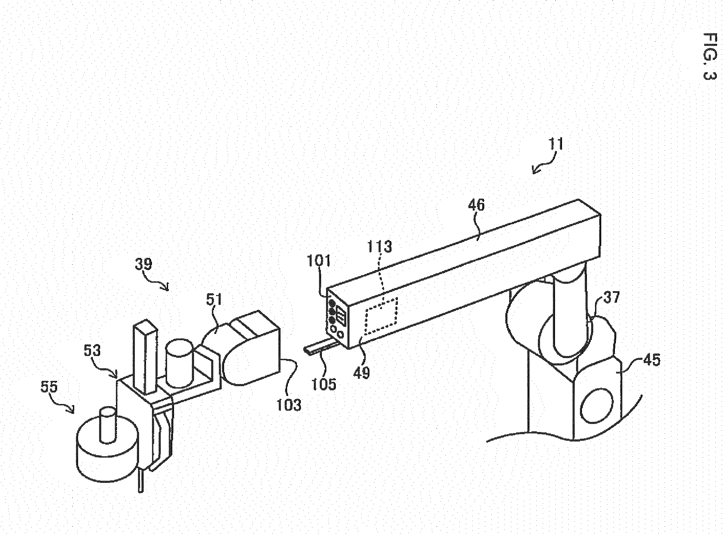

FIG. 3 shows a state in which the end effector 39 is detached from the attachment section 49 of the workpiece transferring device 11. As shown in FIG. 3, various interfaces are provided in a connector portion 101 of the attachment section 49 to handle the different elements of the end effector 39, such as the imaging element 85 and the air cylinder 71. The various interfaces referred to herein are, for example, a communication line corresponding to the position sensor 75, the imaging element 85, and the like, the power supply line L1 connected to the servo motor 51A, the air pipe L3 connected to the air cylinder 71, and the like, as shown in FIG. 4. In this way, the attachment section 49 can operate the end effector 39 by connecting only the necessary communication cables or the like in accordance with the type of interface at the connector portion 103 of the end effector 39. Among the interfaces of the connector portion 103, the data-transmitting communication cable connected to the position sensor 75, the imaging element 85, and the like is connected to a second multiplex communication unit 113 (described later) via the connector portion 101.

A connecting member 105 for securing the end effector 39 is provided on the lower surface of the attachment section 49. The attachment section 49 can secure the end effector 39 by inserting and fastening the connecting member 105 into a connecting hole (not shown) provided in the connector portion 103 of the end effector 39.

### (Workpiece Supplying Device 13)

The workpiece supplying device 13 shown in FIG. 1 is configured such that an end effector 91 can be exchanged according to the use thereof, similarly to the workpiece transferring device 11. Since the workpiece supplying device 13 has the same configuration as that of the workpiece transferring device 11 except for the type of the end effector 91, a detailed description thereof will be omitted. In FIG. 1, the end effector 91 attached to the workpiece supplying device 13 is merely one of the examples, which picks up the workpiece 21 accommodated in each workpiece receiving member 15 and supplies the workpiece 21 to the pick-up placement table 15A in an uncertain orientation. In the workpiece supplying device 13, an arm section 95 is supported by a base section 93, and the end effector 91 is provided at the distal end of the arm section 95. The end effector 91 of the workpiece supplying device 13 is a member that, as a whole, attracts and collects a plurality of workpieces 21, and is attached to an attachment section 97 provided at the distal end of the arm segment 95. The end effector 91 has a relatively powerful electromagnet and attracts and collects as many workpieces 21 as possible at a time.

### (Electrical Configuration of the Workpiece Transferring System 10 and Multiplexed Communication)

FIG. 4 shows electrical connections of the workpiece transferring system 10, and only the portion related to the workpiece transferring device 11 is shown. The system controller 19 of the work transferring system 10 is configured as, for example, a microprocessor built around a CPU 19A that is connected to the air supply unit 73, the power supply 77, and the like and controls the entire system in an integrated manner.

Further, the workpiece transferring device 11 of the present embodiment performs data communication between the base section 31 and the end effector 39 by multiplex communication. As shown in FIG. 2 and FIG. 4, the base section 31 is provided with a first multiplex communication unit 111. The arm section 33 is provided with a second multiplex communication unit 113. The second multiplex communication unit 113 of the present embodiment is provided in the attachment section 49, which is closer to the end effector 39, as shown in FIG. 2.

The first multiplex communication unit 111 and the second multiplex communication unit 113 are logic circuits constituted by programmable logic devices, for example, an FPGA (i.e., Field Programmable Gate Array). The first multiplex communication unit 111 and the second multiplex communication unit 113 are not limited to an FPGA, and may be a logic circuit such as programmable logic device (PLD) or a complex programmable logic device (CPLD), for example. Further, the first multiplex communication unit 111 and the second multiplex communication unit 113 may be implemented by hardware specialized in communication processing or software processing by a CPU, for example.

The second multiplex communication unit 113 is connected to various elements of the end effector 39, such as the imaging element 85 and the force sensor 81, via the connector portions 101, 103. The first multiplex communication unit 111 and the second multiplex communication unit 113 are connected via, for example, an optical fiber cable L4. The optical fiber cable L4 is disposed in the arm section 33. For this purpose, it is preferable to employ a cable having excellent bending resistance as the optical fiber cable L4.

The first multiplex communication unit 111 and the second multiplex communication unit 113 transmit and receive the image data of the imaging element 85, the detection data of the force sensor 81, and the like as multiplexed data MD multiplexed by, for example, Time Division Multiplexing (TDM) via the optical fiber cable L4. The cable connecting the first multiplex communication unit 111 and the second multiplex communication unit 113 is not limited to the optical fiber cable L4, and may be, for example, a LAN cable conforming to the Gigabit Ethernet (registered trademark) communication standard or a USB cable conforming to the USB (Universal Serial Bus) 3.0 communication standard. Further, the multiplex communication line between the first multiplex communication unit 111 and the second multiplex communication unit 113 is not limited to a wired line, and may be wireless.

The workpiece supplying device 13 has the same configuration as the workpiece transferring device 11 shown in FIG. 4, and executes multiplex communication between a first multiplex communication unit (not shown) provided in the base section 93 and a second multiplex communication unit (not shown) provided in the attachment section 97. The system controller 19 is electrically connected to the first multiplex communication unit 111 of the workpiece transferring device 11 and the first multiplex communication unit (not shown) of the workpiece supplying device 13, and executes input/output of various signals with the end effectors 39, 91 of these devices via multiplex communication lines.

### (Workpiece Processing)

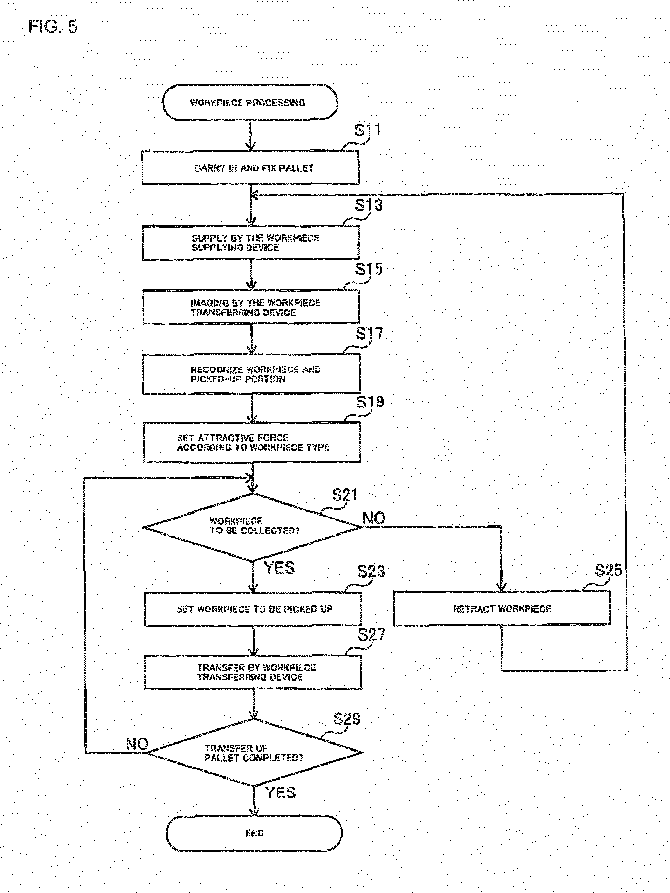

Next, an operation of the workpiece transferring system 10 having the above-described configuration, in particular, a process of arranging and fixing the workpiece 21 to the pallet 17, will be described. FIG. 5 shows an example of workpiece processing executed by the system controller 19 of the workpiece transferring system 10. In the following description, detailed description is omitted for convenience of description, the processing of steps S11 to S29 described below can be performed for each workpiece receiving member 15 in the case where there is a plurality of workpiece receiving members 15 and multiple types of workpieces 21 are arranged and mounted on the pallet 17.

The system controller 19 starts the workpiece processing shown in FIG. 5 by having the CPU 19A execute predetermined control programs. First, in step (hereinafter, referred to as "S") 11 of FIG. 5 , the system controller 19 has the conveying unit 25 carry in the pallet 17 and fix the pallet 17 at the transfer position.

Next, in step S13, the system controller 19 has the workpiece supplying device 13 supply the workpiece 21. The workpiece supplying device 13 moves the end effector 91 into the workpiece receiving member 15, for example, under control of the system controller 19, and collects a large number of workpieces 21. The workpiece supplying device 13 moves the end effector 91 above the center of the pick-up placement table 15A, demagnetizes the electromagnet, and places the workpieces 21 on the pick-up placement table 15A so as to spread the workpieces 21 on the pick-up placement table 15A. The workpieces 21 are distributed and placed on the pick-up placement table 15A in an uncertain orientation.

Next, in step S15, the system controller 19 has the workpiece transferring device 11 capture an image of the top of the pick-up placement table 15A with the imaging unit 55. The workpiece transferring device 11 drives the first to fourth driving sections 32, 35, 37, 51 to move the imaging unit 55 to the upper center of the target workpiece receiving member 15, and then performs imaging. In this case, for example, the system controller 19 receives an encoder signal from the encoder 518 of the fourth driving section 51 via the multiplex communication line, and controls the power supplied from the power supply 77 to the servo motor 51A via the power supply line L1 based on the inputted encoder signal. After the imaging unit 55 is disposed at the imaging position, the system controller 19, via the multiplex communication line, has the lighting unit 83 irradiate light, and transmits a trigger signal to have the imaging element 85 capture an image. The image data captured by the imaging element 85 is inputted to the second multiplex communication unit 113 via the connector portions 101, 103.

The second multiplex communication unit 113 of the present embodiment has a soft processor 113A as shown in FIG. 4. The soft processor 113A is, for example, a central processing unit (CPU) configured with an FPGA. The soft processor 113A executes a part of various processes required by the system controller 19. In step S17, the soft processor 113A executes a process of recognizing the workpiece 21 and the picked-up portion 23, for example. The soft processor 113A determines the region of the pick-up placement table 15A in the image data and the region other than the region of the workpiece 21 by binarization processing, pattern matching, or the like, so as to identify the region of the workpiece 21 that conforms to the reference shape data of the workpiece 21 prepared in advance. As a result, the soft processor 113A recognizes the workpiece 21 that can be collected by the collection section 53 from among the mounted workpieces 21, and also recognizes the picked-up portion 23 of the workpiece 21. The soft processor 113A transmits the recognized information such as the positions of the workpiece 21 and the picked-up portion 23 to the system controller 19 via the multiplex communication line. When there is no workpiece 21 to be collected, the soft processor 113A notifies the system controller 19 of the absence of workpieces 21.

The soft processor 113A is not limited to the above-described processing, and may execute, for example, image correction, lighting control of the lighting unit 83, and brightness control. Alternatively, the soft processor 113A may perform only the process of determining the area by binarization processing and transmit the processed data to the system controller 19. In this way, the system controller 19 only needs to perform pattern matching process based on the reference shape data, for example, and the processing load of the recognition process of the workpieces 21 that can be collected may be reduced. Further, the soft processor 113A may reduce the amount of data to be transmitted through the multiplex communication line by reducing the amount of image data by binarization processing. Further, the soft processor 113A may change the content of processing to be executed according to the processing load of the system controller 19 at each time.

Next, in step S19, the system controller 19 sets the attractive force according to the type of the workpiece 21. The system controller 19 changes the attractive force of the pick-up portion 61 by adjusting the magnitude of the electrical power supplied from the power supply 77 to the pick-up portion 61 via the power supply line L2. The system controller 19 adjusts the electrical power so that, for example, only one workpiece 21 can be collected with the suction force. Thereby, the pick-up portion 61 can attract and collect one workpiece 21 from among overlapping workpieces 21.

In step S21, the system controller 19 determines whether or not there is a workpiece 21 that can be picked up on the pick-up placement table 15A based on the processing result in step S17. When there is a workpiece 21 that can be collected (S21: YES), the system controller 19 sets the workpiece 21 to be collected (S23).

On the other hand, when there is no workpiece 21 to be collected (S21: NO), the system controller 19 controls the workpiece supplying device 13 to return the workpiece 21 on the pick-up placement table 15A to the bottom of the workpiece receiving member 15 (S25), and executes processing from S13 again. As a result, a workpiece 21 is newly placed on the pick-up placement table 15A. Further, even when all the workpieces 21 of the pick-up placement table 15A are exhausted, the workpiece supplying device 13 newly places workpieces 21 on the pick-up placement table 15A.

In S23, after setting the workpiece 21 to be collected, the system controller 19 has the workpiece transferring device 11 move the end effector 39 to the position of the workpiece 21 to be collected. The system controller 19 lowers the pick-up portion 61 of the end effector 39 to the position of the picked-up portion 23 to attract the workpiece 21,

Next, the system controller 19 moves the pick-up portion 61 upward to put the workpiece 21 in a state in which the workpiece hangs from the tip of the pick-up portion 61. The system controller 19 adjusts the amount of air supplied from the air supply unit 73 to the air cylinder 71 via the air pipe L3 based on the detection signal of the position sensor 75 received via the multiplex communication line and lowers the fixing member 67 (refer to FIG. 2).

Further, the system controller 19 has the clamping portions 63 clamp the workpiece 21 while changing the position of the fixing member 67 and adjusting the clamping force of the clamping portion 63 while detecting the stress acting on the clamping portion 63 with the force sensor 81. As a result, the system controller 19 can hold the workpiece 21 with an appropriate holding force with respect to the end effector 39 and suppress the occurrence of defects such as damage to the workpiece 21. Thereafter, in step S27, the system controller 19 moves the end effector 39 onto the pallet 17, demagnetizes the electromagnet of the pick-up portion 61, opens the clamping portion 63, and places the workpiece 21 on the pallet 17.

In step S29, the system controller 19 determines whether transferring of the pallet 17 is completed. The system controller 19 determines success or failure of completion, for example, based on the operation progress of the executed control program. When the system controller 19 completes the current loading operation of the pallet 17 (S29: YES), the system controller 19 carries out the pallet 17, and terminates the processing shown in FIG. 5. Further, for example, the system controller 19 may execute the workpiece process from S11 again and carry in the next pallet 17 to execute the loading operation.

On the other hand, if the system controller 19 determines in step S29 that the loading operation has not been completed (NO in step S29), the system controller 19 executes processing from step S21 again to complete the loading operation for the current pallet 17. In this manner, the workpiece transferring system 10 of the present embodiment can control the end effectors 39, 91 of the workpiece transferring device 11, 14 and the workpiece supplying device 13 via the multiplex communication line, and execute the loading operation.

Incidentally, the base 10A, the base section 31, and the base section 93 are examples of device fixing sections. The workpiece transferring device 11 and the workpiece supplying device 13 are examples of work robots. The system controller 19 is an example of a controller. The end effector 39 is an example of an operating portion. The encoder 51B, the position sensor 75, and the force sensor 81 are examples of sensors.

The present embodiment explained in detail above provides the following effects. <Effect 1> The workpiece transferring device 11 includes the base section 31 fixed to the base 10A, the arm section 33 movably connected to the base section 31, and the end effector 39 provided at the distal end of the arm section 33. The workpiece transferring device 11 arranges the workpiece 21 (i.e., a bolt) on the pallet 17 at predetermined intervals with the end effector 39. The first multiplex communication unit 111 provided in the base section 31 is connected to the second multiplex communication unit 113 provided in the arm section 33 via the optical fiber cable L4. The system controller 19 provided in the base 10A receives various signals from the end effector 39 through the multiplex communication line via the first multiplex communication unit 111 and the second multiplex communication unit 113, and controls the end effector 39 based on the received signals. Thus, in the workpiece transferring device 11 of the present embodiment, the number of communication cables between the end effector 39 and the system controller 19 may be reduced. As a result, even when the number of communication cables according to the type of the end effector 39 is changed, it is not necessary to route the communication cables, that is, to change the shape of the arm section 33 or the like of the workpiece transferring device 11, which enables to improve the degree of freedom in design.

<Effect 2> The end effector 39 is configured to be detachable from the attachment section 49 provided at the distal end of the second arm 46. Further, the connector portion 101 of the attachment section 49 is provided with various interfaces so as to handle various types of end effectors 39, as shown in FIG. 3. Thus, even when the end effector 39 is replaced with an end effector 39 having different mounted elements, it is possible to operate the end effector 39 by connecting only a necessary communication cable to the connector portion 101 in accordance with the type of interface of the connector portion 103 of the end effector 39.

<Effect 3> The second multiplex communication unit 113 is provided in the attachment section 49 positioned at the distal end of the arm section 33 in the extending direction of the second arm 46. As a result, the transmission path of the optical fiber cable L4 connecting the first multiplex communication unit 111 and the second multiplex communication unit 113 may be made as long as possible. Since the arm section 33 can reduce the number of communication cables that pass through the entire portion from the proximal end (i.e., the base section 31) to the distal end (i.e., the attachment section 49), the size and weight of the device may be reduced while increasing the degree of freedom in design.

The soft processor 113A may transmit the processed data to the system controller 19 via the first multiplex communication unit 111 by only reducing the data volume of the image data by binarization processing or the like. In this instance, the system controller 19 performs pattern matching using data after processing by the soft processor 113A, and the system controller 19 recognizes the data that can be collected by the collection section 53 among the workpieces 21 mounted on the pick-up placement table 15A.

The system controller 19 controls the end effector 39 by adjusting the amount of air supplied from the air supply unit 73 to the air cylinder 71 via the air pipe L3 based on, for example, the detection signal of the position sensor 75 of the end effector 39 received via the multiplex communication line. As a result, the system controller 19 can adequately control the end effector 39 through the multiplex communication line.

The second multiplex communication unit 113 includes a soft processor 113A that is a central processing unit (CPU) configured using an FPGA. The soft processor 113A takes over part of the processing performed by the system controller 19 in executing multiplex communication, thereby reducing the processing load of the system controller 19.

The present invention is not limited to the above-mentioned embodiment, and various modifications can be made. For example, in the above embodiment, the end effector 39 provided at the distal end of the arm section 33 is described as an example of the operating portion of the present application, but the present invention is not limited thereto. The operating portion (i.e., the end effector 39) may be provided, for example, at the middle of the extending direction of the arm section 33, such as at the first arm 45 or the third driving section 37. Further, in the above embodiment, the workpiece transferring device 11 is configured to be replaceable by removing the end effector 39 from the arm section 33
. Further, in the above embodiment, the second multiplex communication unit 113 is provided in the attachment section 49 which is the distal end of the arm section 33, but the present invention is not limited to this, and may be provided at other portions of the arm section 33.
The configuration of the end effector 39 described above is an example, and may be a configuration including any one of the fourth driving section 51, the collection section 53, and the imaging unit 55, or a configuration including other types of elements. The second multiplex communication unit 113 may not include a soft processor 113A The first multiplex communication unit 111 may include a soft processor.
Further, in the above embodiment, the articulated robots such as the workpiece transferring device 11 and the workpiece supplying device 13 are described as examples of work robots of the present application, but the present invention is not limited to this. The work robot, for example, may include a so-called parallel link mechanism that supports one end effector by a plurality of arm sections arranged in parallel, or may be another work robot used at a production site or the like.

### Description of reference numerals

10A Base (device fixing section), 11 Workpiece transferring device (work robot), 13 Workpiece supplying device (work robot), 19 System controller (controller), 31, 93 Base sections (device fixing sections), 33, 95 Arm sections, 39, 91 End effectors (operating portions), 49, 97 Attachment sections, 51B encoder (sensor), 55 Imaging unit, 75 Position sensor (sensor), 81 Force sensor (sensor), 101 Connector portion, 111 First multiplex communication unit, 113 Second multiplex communication unit, 113A Soft processor, MD Multiplexed data.

## Claims

1. A work robot (11) comprising:
a device fixing portion (31);
an arm section (33) extending from the device fixing portion (31) and movable with respect to the device fixing portion(31);
an operating portion (39) attached to the arm section (31);
a controller (19), being provided in the device fixing portion (31) and configured to control the operating portion (39);
a first multiplex communication unit (111), being provided in the device fixing portion (31) and configured to transmit multiplexed data obtained by multiplexing communication data transmitted between the controller (19) and the operating portion (39); and
a second multiplex communication unit (113), being provided in the arm section (33), connected to the operating portion (39) and configured to transmit the multiplexed data by being connected to the first multiplex communication unit (111) via a multiplex communication line,
**characterised in that**
the operating portion (39) is configured to be detachable with respect to an attachment section (97) of the arm section, and the attachment section (97; 49), capable of accommodating different types of operating portions (39), comprises a connector portion (101) for connecting to elements of the operating portion (39).

2. The work robot (11) according to claim 1, wherein
the second multiplex communication unit (113) is provided at a distal end of the arm section (33) in a direction to which the arm section (33) extends.

3. The work robot (11) according to claim 1 or 2, wherein
the operating portion includes an imaging unit (55),
the second multiplex communication unit (113) transmits image data captured by an imaging unit (55) to the first multiplex communication unit (111), and
the controller (19) executes image processing on the transmitted image data.

4. The work robot (11) according to any one of claims 1 to 3, wherein
the operating portion (39) comprises a sensor,
the second multiplex communication unit (113) transmits a detection signal of the sensor to the first multiplex communication unit (111), and
the controller (19) controls the operating portion (39) based on the transmitted detection signal.

5. The work robot (11) according to any one of claims 1 to 4, wherein
the second multiplex communication unit (113) includes a programmable logic device of which circuit is designed based on configuration information, and includes a soft processor configured to execute processing related to signals inputted and outputted by the operating portion (39).

## Patentansprüche

1. Arbeitsroboter (11), der umfasst:
einen Abschnitt (31) zum Befestigen einer Vorrichtung;
einen Arm-Teilabschnitt (33), der sich von dem Abschnitt (31) zum Befestigen einer Vorrichtung erstreckt und in Bezug auf den Abschnitt (31) zum Befestigen einer Vorrichtung bewegt werden kann;
einen Betätigungsabschnitt (39), der an dem Arm-Teilabschnitt (31) angebracht ist;
eine Steuerungseinrichtung (19), die in dem Abschnitt (31) zum Befestigen einer Vorrichtung vorhanden und zum Steuern des Betätigungsabschnitts (39) ausgeführt ist;
eine erste Einheit (111) für Multiplex-Kommunikation, die in dem Abschnitt (31) zum Befestigen einer Vorrichtung vorhanden und zum Übertragen gemultiplexter Daten ausgeführt ist, die durch Multiplexen von Kommunikationsdaten gewonnen werden, die zwischen der Steuerungseinrichtung (19) und dem Betätigungsabschnitt (39) übertragen werden; sowie
eine zweite Einheit (113) für Multiplex-Kommunikation, die in dem Arm-Teilabschnitt (33) vorhanden ist, mit dem Betätigungsabschnitt (39) verbunden ist und so ausgeführt ist, dass sie die gemultiplexten Daten durch Verbindung mit der ersten Einheit (111) für Multiplex-Kommunikation über eine Leitung für Multiplex-Kommunikation überträgt,
**dadurch gekennzeichnet, dass**
der Betätigungsabschnitt (39) so ausgeführt ist, dass er in Bezug auf einen Anbringungs-Teilabschnitt (97) des Arm-Teilabschnitts entfernt werden kann, wobei der Anbringungs-Teilabschnitt (97; 49), der in der Lage ist, verschiedene Typen von Betätigungsabschnitten (39) aufzunehmen, einen Verbinderabschnitt (101) zum Verbinden mit Elementen des Betätigungsabschnitts (39) umfasst.

2. Arbeitsroboter (11) nach Anspruch 1, wobei
die zweite Einheit (113) für Multiplex-Kommunikation sich in einer Richtung an einem distalen Ende des Arm-Teilabschnitts (33) befindet, in der sich der Arm-Teilabschnitt (33) erstreckt.

3. Arbeitsroboter (11) nach Anspruch 1 oder 2, wobei
der Betätigungsabschnitt eine Bilderzeugungs-Einheit (55) enthält,
die zweite Einheit (113) für Multiplex-Kommunikation von einer Bilderzeugungs-Einheit (55) erfasste Bilddaten zu der ersten Einheit (111) für Multiplex-Kommunikation überträgt, und
die Steuerungseinrichtung (19) Bildverarbeitung an den übertragenen Bilddaten durchführt.

4. Arbeitsroboter (11) nach einem der Ansprüche 1 bis 3, wobei
der Betätigungsabschnitt (39) einen Sensor umfasst,
die zweite Einheit (113) für Multiplex-Kommunikation ein Erfassungs-Signal des Sensors zu der ersten Einheit (111) für Multiplex-Kommunikation überträgt, und
die Steuerungseinrichtung (19) den Betätigungsabschnitt (39) auf Basis des übertragenen Erfassungs-Signals steuert.

5. Arbeitsroboter (11) nach einem der Ansprüche 1 bis 4, wobei
die zweite Einheit (113) für Multiplex-Kommunikation eine programmierbare Logik-Vorrichtung enthält, deren Schaltung auf Basis von Konfigurationsinformationen konstruiert wird, und einen Soft-Prozessor enthält, der so konfiguriert ist, dass er Verarbeitung in Bezug auf Signale ausführt, die über den Betätigungsabschnitt (39) eingegeben und ausgegeben werden.

## Revendications

1. Robot de travail (11) comprenant :
une portion de fixation de dispositif (31) ;
une section de bras (33) qui s'étend depuis la portion de fixation de dispositif (31) et déplaçable par rapport à la portion de fixation de dispositif (31) ;
une portion opérationnelle (39) attachée à la section de bras (31) ;
un contrôleur (19) pourvu dans la portion de fixation de dispositif (31) et configuré pour contrôler la portion opérationnelle (39) ;
une première unité de communication multiplexée (111), pourvue dans la portion de fixation de dispositif (31) et configurée pour transmettre des données multiplexées obtenues en multiplexant des données de communication transmises entre le contrôleur (19) et la portion opérationnelle (39) ; et
une deuxième unité de communication multiplexée (113), pourvue dans la section de bras (33), connectée à la portion opérationnelle (39) et configurée pour transmettre les données multiplexées en étant connectée à la première unité de communication multiplexée (111) via une ligne de communication multiplexée,
**caractérisé en ce que**
la portion opérationnelle (39) est configurée pour être détachable par rapport à une section d'attachement (97) de la section de bras, et la section d'attachement (97 ; 49), capable de recevoir différents types de portions opérationnelles (39), comprend une portion de connecteur (101) pour se connecter à des éléments de la portion opérationnelle (39).

2. Robot de travail (11) selon la revendication 1, dans lequel
la deuxième unité de communication multiplexée (113) est pourvue à une extrémité distale de la section de bras (33) dans une direction dans laquelle s'étend la section de bras (33).

3. Robot de travail (11) selon la revendication 1 ou 2, dans lequel
la portion opérationnelle comprend une unité d'imagerie (55),
la deuxième unité de communication multiplexée (113) transmet des données d'image capturées par une unité d'imagerie (55) à la première unité de communication multiplexée (111), et
le contrôleur (19) exécute un traitement d'image sur les données d'image transmises.

4. Robot de travail (11) selon l'une quelconque des revendications 1 à 3, dans lequel
la portion opérationnelle (39) comprend un capteur,
la deuxième unité de communication multiplexée (113) transmet un signal de détection du capteur à la première unité de communication multiplexée (111), et
le contrôleur (19) contrôle la portion opérationnelle (39) sur la base du signal de détection transmis.

5. Robot de travail (11) selon l'une quelconque des revendications 1 à 4, dans lequel
la deuxième unité de communication multiplexée (113) comprend un circuit logique programmable dont le circuit est conçu sur la base d'information de configuration, et comprend un processeur softcore configuré pour exécuter un traitement relatif à des signaux entrés et sortis par la portion opérationnelle (39).
